# EUROPEAN PATENT APPLICATION

(11) **EP 4 783 005 A1**
(43) Date of publication of application: **29.07.2026**
(21) Application number: 24870481.9
(22) Date of filing: 13.09.2024
(51) Int. Cl.: G06F 9/54

(54) **CACHE MANAGEMENT METHOD AND DEVICE AND COMPUTER READABLE STORAGE MEDIUM**

(30) Priority: 28.09.2023 CN 202311286765
(71) Applicant: HUAWEI TECHNOLOGIES CO., LTD., Shenzhen 518129 (CN)
(72) Inventor: WANG, Dong, Shenzhen, Guangdong 518129 (CN); LI, Xiuqiao, Shenzhen, Guangdong 518129 (CN); GAO, Shuai, Shenzhen, Guangdong 518129 (CN); LU, Jiwei, Shenzhen, Guangdong 518129 (CN); LIU, Shunbi, Shenzhen, Guangdong 518129 (CN)
(74) Representative: Maiwald GmbH
(86) International application number: PCT/CN2024/118777
(87) International publication number: WO 2025/066937

(57) **Abstract**

This application provides a cache management method, applied to a computing cluster running a first process and a second process that are of a first user, and a cache service process. The method includes: The first process obtains a first I/O request corresponding to the first process. When a current first memory space (which is a section of space in a shared memory pool of the computing cluster, and shared by the first process and the second process) of the first process is insufficient to store data corresponding to the first I/O request, the first process sends a first cache application instruction to the cache service process, to apply for allocation of a second memory space in the shared memory pool. The second process obtains a second I/O request corresponding to the second process. When the first memory space corresponding to the second process is insufficient to store data corresponding to the second I/O request, the second process sends a second cache application instruction to the cache service process, to apply for allocation of the second memory space. According to this method, a problem of unauthorized access between processes of different users may be resolved, and the shared memory pool can also be dynamically allocated.

## Description

This application claims priority to Chinese Patent Application No. 202311286765.1, filed with the China National Intellectual Property Administration on September 28, 2023 and entitled "CACHE MANAGEMENT METHOD AND APPARATUS, AND COMPUTER-READABLE STORAGE MEDIUM", which is incorporated herein by reference in its entirety.

### TECHNICAL FIELD

This application relates to the field of computer technologies, and in particular, to a cache management method and apparatus, and a computer-readable storage medium.

### BACKGROUND

A cache refers to a space for caching a disk file in a memory of a computer system. The cache exchanges data with a processor before a disk performs data exchange. Therefore, the cache has a very fast rate. Cache setting is one of important factors for all modern computer systems to achieve high performance.

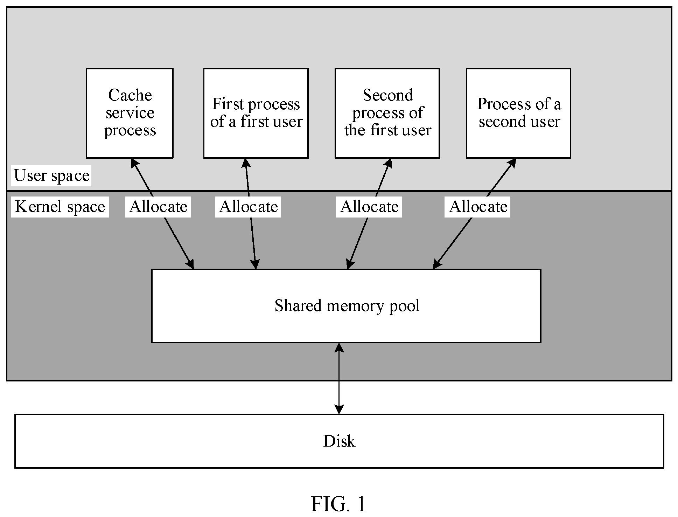

As shown in FIG. 1, a cache service process and user processes (a first process of a first user, a second process of the first user, and a process of a second user shown in FIG. 1) are run in a computing cluster. The computing cluster includes a shared memory pool, and the shared memory pool may be used by all the user processes that are run in the computing cluster to apply for memory spaces from the shared memory pool as caches.

Currently, a specific implementation process in which the user process applies for the memory space from the shared memory pool as the cache is generally as follows: The user process sends a cache application instruction to the cache service process, and after receiving the cache application instruction, the cache service process allocates, according to the cache application instruction, the entire shared memory pool to the user process as the cache for use. That is, each of the user processes may use the entire shared memory pool as the cache. Consequently, a problem of unauthorized access between processes of different users easily occurs.

### SUMMARY

This application provides a cache management method and apparatus, and a computer-readable storage medium, to resolve a problem of unauthorized access between processes of different users, and dynamically allocate a shared memory pool in a computing cluster.

According to a first aspect, a cache management method is provided. The cache management method may be applied to a computing cluster including at least one compute device, where the computing cluster runs a first process and a second process that are of a first user, and a cache service process, and the computing cluster includes a shared memory pool. The method includes: The first process obtains a first input/output (input/output, I/O) request corresponding to the first process; the first process sends a first cache application instruction to the cache service process when a current first memory space of the first process is insufficient to store data corresponding to the first I/O request, where the first memory space is a section of space in the shared memory pool and is shared by the first process and the second process; the cache service process allocates a second memory space in the shared memory pool to the first process according to the first cache application instruction; the second process obtains a second I/O request corresponding to the second process; the second process sends a second cache application instruction to the cache service process when the first memory space corresponding to the second process is insufficient to store data corresponding to the second I/O request; and the cache service process allocates the second memory space to the second process according to the second cache application instruction.

In the foregoing solution, because the first memory space in the shared memory pool is only shared by the first process of the first user and the second process of the first user, and is not shared by a process of another user, the first process of the first user and the second process of the first user have permission to access data in the first memory space, and the process of the another user does not have permission to access the data in the first memory space, thereby avoiding unauthorized access to the data in the first memory space. Similarly, because the second memory space in the shared memory pool is only shared by the first process of the first user and the second process of the first user, and is not shared by a process of another user, the first process of the first user and the second process of the first user have permission to access data in the second memory space, and the process of the another user does not have permission to access the data in the second memory space, thereby avoiding unauthorized access to the data in the second memory space.

In addition, in the foregoing solution, when the current first memory space of the first process is insufficient to store the data corresponding to the first I/O request, the cache service process allocates the second memory space to the first process according to the first cache application instruction sent by the first process, and when the first memory space corresponding to the second process is insufficient to store the data corresponding to the second I/O request, the cache service process allocates the second memory space to the second process according to the second cache application instruction sent by the second process. Therefore, the shared memory pool is dynamically allocated. It may be understood that, when the shared memory pool can be dynamically allocated, a waste of memory pool resources can be avoided, and the memory pool resources can be efficiently utilized.

In a possible implementation, that the cache service process allocates the second memory space in the shared memory pool to the first process according to the first cache application instruction includes: When the cache service process determines that frequency of a cache application instruction received from processes of the first user is higher than a frequency threshold, the cache service process allocates a plurality of second memory spaces in the shared memory pool to the first process according to the first cache application instruction. In this way, a quantity of times that the processes of the first user apply for memory spaces may be reduced.

In a possible implementation, that the cache service process allocates the second memory space in the shared memory pool to the first process according to the first cache application instruction includes: The cache service process allocates the second memory space in the shared memory pool to the first process based on a first capacity carried in the first cache application instruction, where a capacity of the second memory space is the first capacity. In this way, a memory space in the shared memory pool may be allocated on demand based on a requirement of a user process.

To improve flexibility of the solution, in a possible implementation, a capacity of the second memory space is a fixed capacity.

In a possible implementation, the first memory space is shared by the first process, the second process, and the cache service process.

The foregoing implementation is implemented, so that the cache service process may assist, through the first memory space, the first process/second process in performing an I/O operation. To be specific, the cache service process reads I/O data corresponding to the first process/second process from a disk to the first memory space, or the cache service process writes the I/O data corresponding to the first process/second process from the first memory space to the disk for persistent storage, thereby improving I/O performance of the user process.

In a possible implementation, the method further includes: After the first memory space is full of data, the cache service process stores the data in the first memory space into a disk of the computing cluster; and the cache service process releases the first memory space shared by the first process, the second process, and the cache service process. In this way, the memory space in the shared memory pool may be used cyclically and efficiently.

In a possible implementation, that the cache service process releases the first memory space shared by the first process, the second process, and the cache service process includes: When the cache service process determines that use popularity of a memory space in a namespace of the first user is lower than a popularity threshold, the cache service process releases the first memory space shared by the first process, the second process, and the cache service process, where the namespace of the first user includes a memory space that is allocated to the first process and that is in the shared memory pool and a memory space that is allocated to the second process and that is in the shared memory pool.

It may be understood that, if the use popularity of the memory space in the namespace of the first user is higher than or equal to the popularity threshold, it indicates that the use popularity of the memory space in the namespace of the first user is high. In this case, the cache service process does not release the first memory space shared by the first process, the second process, and the cache service process, so that frequency of applying for the memory space by the process of the first user may be reduced.

In a possible implementation, that the cache service process releases the first memory space shared by the first process, the second process, and the cache service process includes: The cache service process generates tag information, where the tag information indicates that the first memory space is unavailable; the cache service process sends the tag information to the first process, where the tag information is used by the first process to release the first memory space corresponding to the first process; the cache service process sends the tag information to the second process, where the tag information is used by the second process to release the first memory space corresponding to the second process; and the cache service process releases the first memory space corresponding to the cache service process.

In a possible implementation, the first process, the second process, and the cache service process are run on a same compute device or different compute devices in the computing cluster.

According to a second aspect, a cache management apparatus is provided. The cache management apparatus is used in a computing cluster including at least one compute device, where the computing cluster runs a first process and a second process that are of a first user, and a cache service process, the computing cluster includes a shared memory pool. The apparatus includes:
an obtaining module, configured to obtain, through the first process, a first I/O request corresponding to the first process;
a sending module, configured to send, through the first process, a first cache application instruction to the cache service process when a current first memory space of the first process is insufficient to store data corresponding to the first I/O request, where the first memory space is a section of space in the shared memory pool and is shared by the first process and the second process; and
a memory allocation module, configured to allocate, through the cache service process, a second memory space in the shared memory pool to the first process according to the first cache application instruction, where
the obtaining module is further configured to obtain, through the second process, a second I/O request corresponding to the second process;
the sending module is further configured to send, through the second process, a second cache application instruction to the cache service process when the first memory space corresponding to the second process is insufficient to store data corresponding to the second I/O request; and
the memory allocation module is further configured to allocate, through the cache service process, the second memory space to the second process according to the second cache application instruction.

In a possible implementation, the memory allocation module is specifically configured to:
when the cache service process determines that frequency of a cache application instruction received from processes of the first user is higher than a frequency threshold, allocate, through the cache service process, a plurality of second memory spaces in the shared memory pool to the first process according to the first cache application instruction.

In a possible implementation, the memory allocation module is specifically configured to:
allocate, through the cache service process, the second memory space in the shared memory pool to the first process based on a first capacity carried in the first cache application instruction, where a capacity of the second memory space is the first capacity.

In a possible implementation, a capacity of the second memory space is a fixed capacity.

In a possible implementation, the first memory space is shared by the first process, the second process, and the cache service process.

In a possible implementation, the apparatus further includes a memory releasing module, and
the memory releasing module is configured to:
after the first memory space is full of data, store, through the cache service process, the data in the first memory space into a disk of the computing cluster; and
release, through the cache service process, the first memory space shared by the first process, the second process, and the cache service process.

In a possible implementation, the memory releasing module is specifically configured to:
when the cache service process determines that use popularity of a memory space in a namespace of the first user is lower than a popularity threshold, release, through the cache service process, the first memory space shared by the first process, the second process, and the cache service process, where the namespace of the first user includes a memory space that is allocated to the first process and that is in the shared memory pool and a memory space that is allocated to the second process and that is in the shared memory pool.

In a possible implementation, the memory releasing module is specifically configured to:
generate, through the cache service process, tag information, where the tag information indicates that the first memory space is unavailable;
send, through the cache service process, the tag information to the first process, where the tag information is used by the first process to release the first memory space corresponding to the first process;
send, through the cache service process, the tag information to the second process, where the tag information is used by the second process to release the first memory space corresponding to the second process; and
release, through the cache service process, the first memory space corresponding to the cache service process.

In a possible implementation, the first process, the second process, and the cache service process are run on a same compute device or different compute devices in the computing cluster.

For related beneficial effects and descriptions of the cache management apparatus provided in the second aspect and any one of the implementations of the second aspect, refer to the related beneficial effects and descriptions of the first aspect and any one of the implementations of the first aspect. Details are not described herein again.

According to a third aspect, a computing cluster is provided. The computing cluster includes at least one compute device, where each of the at least one compute device includes a storage and a processor, and a processor of the at least one compute device is configured to execute instructions stored in a storage of the at least one compute device, to cause the computing cluster to implement the method provided in the first aspect or any possible implementation of the first aspect.

According to a fourth aspect, a computer-readable storage medium is provided. The computer-readable storage medium stores instructions, and the instructions are used to implement the method provided in the first aspect or any possible implementation of the first aspect.

According to a fifth aspect, a computer program product is provided. The computer program product includes a computer program. When the computer program is read and executed by a compute device, the compute device is caused to perform the method provided in the first aspect or any possible implementation of the first aspect.

### BRIEF DESCRIPTION OF DRAWINGS

FIG. 1 is a diagram of a structure of a computing cluster according to an embodiment of this application;
FIG. 2 is an interaction flowchart of a cache management method according to an embodiment of this application;
FIG. 3 is a diagram of implementing memory space isolation in a shared resource pool according to an embodiment of this application;
FIG. 4 is a diagram in which a cache service process tags a cache block as unavailable according to an embodiment of this application;
FIG. 5 is a diagram of local first and then remote cache application according to an embodiment of this application;
FIG. 6 is a diagram of a structure of a cache management apparatus according to an embodiment of this application;
FIG. 7 is a diagram of a structure of a compute device according to an embodiment of this application; and
FIG. 8 is a diagram of a structure of a computing cluster according to an embodiment of this application.

### DESCRIPTION OF EMBODIMENTS

The following describes technical solutions provided in this application with reference to accompanying drawings.

An application scenario of this application is first described.

FIG. 1 is a diagram of a structure of a computing cluster according to an embodiment of this application. As shown in FIG. 1, a cache service process and processes of a plurality of users are run in a user space of the computing cluster. In FIG. 1, for example, the processes of the plurality of users are a process of a first user and a process of a second user, where the process of the first user includes a first process of the first user and a second process of the first user.

The computing cluster may include at least one compute device, and the at least one compute device may be a personal computer, a notebook computer, a physical server, a cloud server, or the like. When the computing cluster includes a plurality of compute devices, the plurality of compute devices may be connected via a communication network of any communication mechanism/communication standard. The communication network may be in a form of a wide area network, a local area network, a point-to-point connection, or any combination thereof.

When the computing cluster includes the plurality of compute devices, the cache service process, the process of the first user, and the process of the second user may be run on a same compute device or different compute devices in the computing cluster. For example, the plurality of compute devices include a compute device A and a compute device B, the cache service process, the first process of the first user, and the second process of the first user are run on the compute device A, and the process of the second user is run on the compute device B.

As shown in FIG. 1, a shared memory pool is set in a kernel space of the computing cluster, and the shared memory pool may be used by all the user processes that are run in the computing cluster to apply for memory spaces from the shared memory pool as caches. When the computing cluster includes a single compute device, the shared memory pool may be a part or all of a memory of the single compute device. When the computing cluster includes a plurality of compute devices, the shared memory pool may be a global memory including a part or all of memories of the plurality of compute devices.

Currently, a specific implementation process in which the user process applies for the memory space from the shared memory pool as the cache is generally as follows: The user process sends a cache application instruction to a cache service process, and after receiving the cache application instruction, the cache service process allocates, according to the cache application instruction, the entire shared memory pool to the user process as the cache for use. That is, each of the user processes may use the entire shared memory pool as the cache.

With the help of the shared memory pool, when a user process needs to perform an input/output (input/output, I/O) operation, the user process only needs to access the shared memory pool to read and write I/O data. A process of reading the I/O data required by the user process from the shared memory pool into the shared memory pool and a process of writing the I/O data written by the user process in the shared memory pool into the disk are both implemented by the cache service process. The user process does not need to access the disk to read and write the data, thereby improving I/O performance of the user process.

It should be understood that, the computing cluster shown in FIG. 1 is merely used as an example. In a specific implementation, the computing cluster may further run another user process other than the first process of the first user, the second process of the first user, and the process of the second user, and the computing cluster may further include another component module or more component modules. This is not specifically limited in this application.

In the computing cluster shown in FIG. 1, because the cache service process allocates the entire shared memory pool to processes of different users for use, after the process of the first user puts I/O data of the process of the first user into the shared memory pool, the process of the second user may also access the shared memory pool, to obtain the I/O data of the process of the first user. Consequently, a problem of unauthorized access easily occurs.

To resolve the foregoing problem, this application provides a cache management method and a cache management apparatus, so that when using a shared memory pool, processes of different users have no permission to access I/O data that is of processes of other users and that is in the shared memory pool, and the shared memory pool may also be dynamically allocated, thereby efficiently utilizing the shared memory pool.

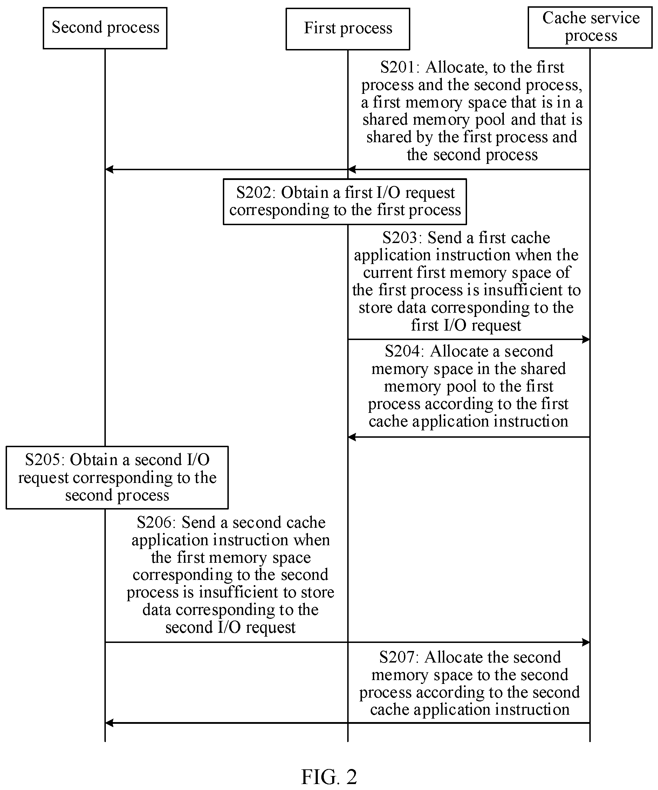

The following describes the cache management method provided in this application based on the computing cluster shown in FIG. 1 and the flowchart shown in FIG. 2. FIG. 2 is a schematic flowchart of a cache management method according to an embodiment of this application. The following steps are specifically included.

S201: A cache service process allocates, to a first process and a second process, a first memory space that is in a shared memory pool and that is shared by the first process and the second process.

S202: The first process obtains a first I/O request corresponding to the first process.

S203: The first process sends a first cache application instruction to the cache service process when the current first memory space of the first process is insufficient to store data corresponding to the first I/O request.

S204: After receiving the first cache application instruction sent by the first process, the cache service process allocates a second memory space in the shared memory pool to the first process according to the first cache application instruction.

S205: The second process obtains a second I/O request corresponding to the second process.

S206: The second process sends a second cache application instruction to the cache service process when the first memory space corresponding to the second process is insufficient to store data corresponding to the second I/O request.

S207: After receiving the second cache application instruction sent by the second process, the cache service process allocates the second memory space to the second process according to the second cache application instruction.

The following first describes concepts related to embodiments of this application, such as an I/O request (for example, a first I/O request or a second I/O request), data corresponding to the I/O request, and allocation of a memory space in the shared memory pool to a user process by the cache service process.

In embodiments of this application, the I/O request indicates the user process to perform an I/O operation, and specifically, may be a read/write data request (which may be referred to as a read/write request for short) of the user process for a disk of a computing cluster. The I/O request is used for reading I/O data from the disk to the memory space allocated to the user process (that is, a cache of the user process), or writing I/O data to the memory space allocated to the user process, and subsequently writing the I/O data to the disk from the memory space allocated to the user process, to perform persistent storage.

When the I/O request is a read request, the data corresponding to the I/O request is data that needs to be read by the user process from the disk. When the I/O request is a write request, the data corresponding to the I/O request is data that needs to be written by the user process into the disk. In the following embodiments, the data corresponding to the I/O request is collectively referred to as the I/O data.

In embodiments of this application, the following is involved: The cache service process allocates the first memory space in the shared memory pool to the first process, the cache service process allocates the first memory space in the shared memory pool to the second process, the cache service process allocates the second memory space in the shared memory pool to the first process, and the cache service process allocates the second memory space in the shared memory pool to the second process. By using that the cache service process allocates the first memory space in the shared memory pool to the first process as an example, the cache service process may send an address of the first memory space to the first process. The address of the first memory space is used by the first process to establish a mapping relationship between a virtual address space of the first process and the first memory space. After the mapping relationship is established, the first process may read and write the first memory space based on the mapping relationship. However, a process to which the first memory space is not allocated cannot perform an I/O operation through the first memory space.

Optionally, the cache service process may also establish a mapping relationship between a virtual address space of the cache service process and the first memory space. After the mapping relationship is established, the first memory space shared by the cache service process and the first process is formed. Therefore, the cache service process may assist, through the first memory space, the first process in performing the I/O operation. To be specific, the cache service process reads I/O data corresponding to the first process from the disk to the first memory space, or the cache service process writes I/O data corresponding to the first process from the first memory space to the disk for persistent storage.

In embodiments of this application, the following is involved: The first process and the second process share the first memory space, and the first process and the second process share the second memory space; and the following is also involved: A plurality of processes share a same memory space, for example, the first process, the second process, and the cache service process share the first memory space. That the first process and the second process share the first memory space is used as an example, and means that both the first process and the second process are allocated with the first memory space as caches, in other words, the first process establishes a mapping relationship between a virtual address space of the first process and the first memory space, and the second process establishes a mapping relationship between a virtual address space of the second process and the first memory space. Therefore, both the first process and the second process may perform I/O operations through the first memory space. However, a process that does not share the first memory space cannot perform an I/O operation through the first memory space.

In embodiments of this application, if the first user needs to share the first memory space with a process other than the first process and the second process, the first user needs to send a cache application instruction to the cache service process. After determining that the process is also a process of the first user, the cache service process allocates the first memory space to the process according to the cache application instruction, so that the process also shares the first memory space. When a process of another user other than a process of the first user, for example, a process of a second user, sends a cache application instruction to the cache service process, the cache service process determines that the process is not a process of the first user, and then allocates, according to the cache application instruction, another memory space in the shared memory pool other than the first memory space to the process of the second user.

It may be learned that, through the foregoing process, memory spaces that are in the shared memory pool and that are allocated to processes of different users can be isolated from each other, thereby avoiding a problem of unauthorized access between the processes of different users.

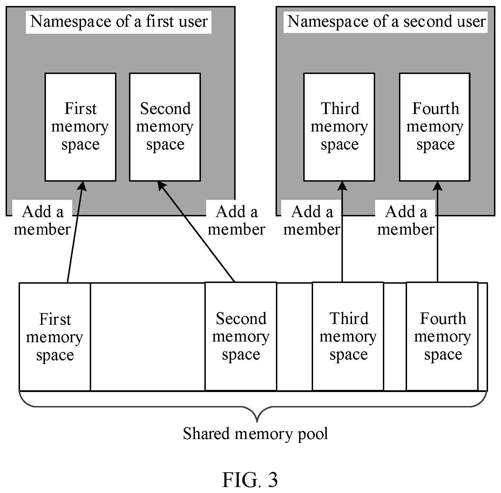

In a possible embodiment, before the cache service process sends the address of the first memory space to the first process, if the cache service process has created a namespace (namespace) of the first user, where a namespace is a resource isolation solution and is user-level resource isolation, the cache service process creates different namespaces for different users, and when allocating a memory space in the shared memory pool to a process of each user, the cache service process first adds, to a namespace of the user, the memory space allocated to the process of the user, so that the process of each user may access the memory space in the namespace of each user, but cannot access a memory space in a namespace of another user, the cache service process adds, to the namespace of the user, the memory space allocated to the process of the user, which may be understood as that the memory space allocated to the process of the user becomes a member of the namespace of the user. As shown in FIG. 3, both the first memory space and the second memory space that are allocated to the first process of the first user become members of the namespace of the first user, and both a third memory space and a fourth memory space that are allocated to the process of the second user become members of a namespace of the second user, thereby implementing isolation of memory space resources that correspond to different users and that are in the shared memory pool.

Based on the foregoing content, the following describes the steps shown in FIG. 2 in detail.

In S201, for a specific implementation process in which the cache service process allocates, to the first process and the second process, the first memory space that is in the shared memory pool and that is shared by the first process and the second process, refer to the foregoing related descriptions. For brevity of the specification, details are not described herein again.

For the first I/O request and the second I/O request in S202 and S205, and the data corresponding to the first I/O request and the data corresponding to the second I/O request in S203 and S206, refer to the foregoing related descriptions. For brevity of the specification, details are not described herein again.

In S207, after receiving the second cache application instruction sent by the second process, the cache service process may first determine whether a memory space that has not been allocated to the second process exists in a memory space allocated to the first process. If it is determined that the memory space that has not been allocated to the second process exists in the memory space allocated to the first process, the cache service process allocates, to the second process, the memory space that has not been allocated to the second process. For example, if the first memory space allocated to the first process has been allocated to the second process, and the second memory space allocated to the first process has not been allocated to the second process, the second memory space is then allocated to the second process. If the first memory space and the second memory space that are allocated to the first process have been allocated to the second process, a section of space in a remaining memory space in the shared memory pool is allocated to the second process according to the second cache application instruction.

For a specific implementation process in which the cache service process allocates the second memory space in the shared memory pool to the first process in S204, and the cache service process allocates the second memory space to the second process in S207, refer to the foregoing related descriptions. For brevity of the specification, details are not described herein again.

It should be noted that, the first memory space may be a section of memory space with consecutive addresses in the shared memory pool, or may be a section of memory space with non-consecutive addresses in the shared memory pool, and the second memory space may be a section of memory space with consecutive addresses in the shared memory pool, or may be a section of memory space with non-consecutive addresses in the shared memory pool. This is not specifically limited in this application.

In a specific embodiment of this application, a size of a memory space (for example, the second memory space) that is in the shared memory pool and that is allocated by the cache service process to the user process according to a cache application instruction (for example, the first cache application instruction) sent by the user process (for example, the first process) may be devised in the following two manners.
1. The size of the memory space allocated to the cache service process each time is fixed.
2. The cache service process performs allocation based on a user requirement. To be specific, the cache application instruction sent by the user process carries a capacity of a to-be-applied memory space, and the cache service process allocates a memory space in the shared pool to the user process based on the capacity that is of the to-be-applied memory space and that is carried in the cache application instruction, and a capacity of the allocated memory space is the same as the capacity that is of the to-be-applied memory space and that is carried in the cache application instruction.

It should be understood that, the foregoing Manner 1 and Manner 2 are merely examples, and should not be considered as a limitation on an implementation in which the cache service process divides the memory space according to the first cache application instruction.

In a possible embodiment, when receiving the first cache application instruction sent by the first process, the cache service process may collect statistics on frequency of cache application instructions received from processes of the first user (meaning all processes of the first user), and determine whether the frequency is greater than a frequency threshold. When determining that the frequency is greater than the frequency threshold, the cache service process allocates a plurality of second memory spaces in the shared memory pool to the first process according to the first cache application instruction; or when determining that the frequency is less than or equal to the frequency threshold, the cache service process allocates one second memory space in the shared memory pool to the first process according to the first cache application instruction. In this way, a quantity of times that the processes of the first user apply for memory spaces may be reduced.

In a specific embodiment of this application, after the first memory space/second memory space is full of data, the cache service process may further store the data in the first memory space/second memory space into the disk of the computing cluster for persistent storage, and then the cache service process releases (reclaims) the first memory space/second memory space shared by the first process and the second process and/or the cache service process, to implement cyclic and efficient use of the memory space in the shared memory pool.

For example, the cache service process releases the first memory space shared by the first process, the second process, and the cache service process. In a possible embodiment, after storing the data in the first memory space into the disk of the computing cluster, the cache service process immediately releases the first memory space shared by the first process, the second process, and the cache service process.

In another possible embodiment, if the cache service process implements, by creating user-level namespaces for different users, isolation of memory space resources in the shared memory pool that may be used by processes of different users, after storing the data in the first memory space into the disk of the computing cluster, the cache service process may determine whether use popularity of the memory space in the namespace of the first user is lower than a popularity threshold. When determining that the use popularity is lower than the popularity threshold, the cache service process releases the first memory space shared by the first process, the second process, and the cache service process. When determining that the use popularity is greater than or equal to the popularity threshold, the cache service process does not release the first memory space shared by the the first process, the second process, and the cache service process. The use popularity of the memory space in the namespace of the first user may be reflected by using frequency or a turnover rate.

It may be understood that, if the use popularity of the memory space in the namespace of the first user is higher than or equal to the popularity threshold, it indicates that the use popularity of the memory space in the namespace of the first user is high. In this case, the cache service process does not release the first memory space shared by the the first process, the second process, and the cache service process, so that frequency of applying for the memory space by the process of the first user may be reduced.

Further, a specific process in which the cache service process releases the first memory space shared by the the first process, the second process, and the cache service process includes: The cache service process generates tag information, where the tag information indicates that the first memory space is unavailable; the cache service process sends the tag information to the first process, where the tag information is used by the first process to release the first memory space corresponding to the first process; the cache service process sends the tag information to the second process, where the tag information is used by the second process to release the first memory space corresponding to the second process; and the cache service process also releases the first memory space corresponding to the cache service process. That the first process/the second process/the cache service process releases the first memory space corresponding to the first process/the second process/the cache service process means that the first process/the second process/the cache service process removes a mapping relationship between the virtual address space of the first process/the second process/the cache service process and the first memory space.

Further, for example, the cache service process sends the tag information to the first process. The cache service process may send the tag information to the first process in the following Manner 1 or Manner 2.

Manner 1: The cache service process receives an obtaining request that is periodically sent by the first process and that is for the tag information corresponding to the first memory space, and returns the tag information to the first process based on the obtaining request.

Specifically, the cache service process may query, based on the obtaining request, whether the tag information corresponding to the first memory space exists. When determining that the tag information corresponding to the first memory space exists, the cache service process returns the tag information corresponding to the first memory space to the first process.

Optionally, after generating the tag information, the cache service process may alternatively directly send the tag information to the first process.

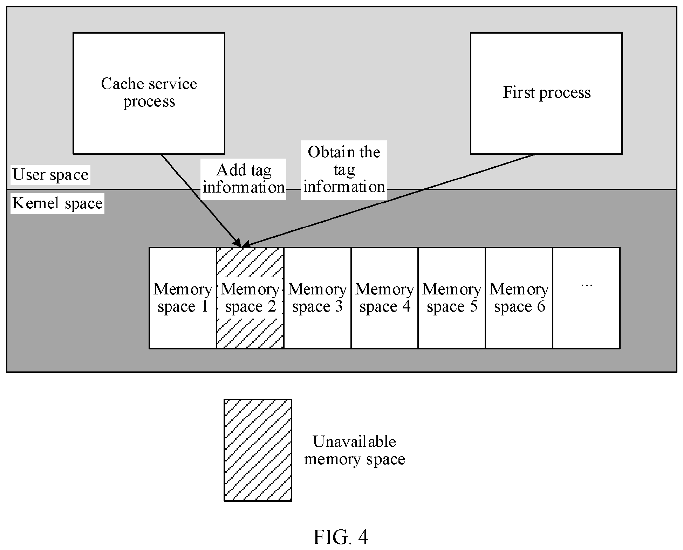

Manner 2: The cache service process adds the tag information to the first memory space, and the first process may obtain the tag information when accessing the first memory space. As shown in FIG. 4, for example, the first memory space is a memory space 2. The cache service process adds tag information to the memory space 2.

In specific implementation, if a process (for example, the first process) in the process of the first user does not release the first memory space corresponding to the first process, but the cache service process has released the first memory space corresponding to the cache service process, when the first process accesses the first memory space corresponding to the first process again, I/O data corresponding to the first process cannot be persistently stored in the disk, and even the first process is caused to break down. To avoid the foregoing case, when determining that all user processes (that is, the first process and the second process) that share the first memory space release the first memory space corresponding to all the user processes, the cache service process may release the first memory space corresponding to the cache service process.

In a possible embodiment, if the cache service process sends, in the foregoing Manner 1, the tag information to the first process and the second process that share the first memory space, the cache service process may start timing from a moment at which the cache service process receives an obtaining request from the process of the first user the last time, and when the timing reaches first duration, the cache service process determines that both the first process and the second process release the first memory space corresponding to the first process or the second process. It may be understood that, that the timing from the moment at which the cache service process receives the obtaining request from the process of the first user the last time reaches the first duration indicates that the first process and the second process have not sent obtaining requests to the cache service process for a long time, and this usually indicates that both the first process and the second process have released the first memory space of the first process and the second process.

The first duration may be customized based on an actual scenario. For example, a period may be set for the cache service process. When the cache service process has waited for a specific quantity of periods after receiving the obtaining request from the process of the first user the last time, the cache service process determines that both the first process and the second process release the first memory space corresponding to the first process or the second process.

Optionally, after releasing the first memory space corresponding to the first process/second process, the first process/second process may send a notification to the cache service process, to notify that the first memory space corresponding to the first process/second process has been released.

In specific implementation, if the cache service process implements, by creating the user-level namespaces for different users, isolation of the memory space resources in the shared memory pool that may be used by the processes of different users, in an example in which the first process releases the first memory space corresponding to the first process, the first process may clear the first memory space in the namespace of the first user in the first process, and remove the mapping relationship between the virtual address space in the first process and the first memory space. A process in which the second process releases the first memory space corresponding to the second process and a process in which the cache service process releases the first memory space corresponding to the cache service process are both similar to the process in which the first process releases the first memory space corresponding to the first process. Details are not described herein again.

When a plurality of processes share a same memory space, for example, the first process and the second process share the first memory space, to ensure secure access to the first memory space and avoid resource contention and data inconsistency, the first memory space may be protected through a synchronization mechanism (for example, locking), to ensure that only one process may access the first memory space at a time.

When the computing cluster includes a plurality of compute devices, and the shared memory pool of the computing cluster includes memories of the plurality of compute devices, after the cache service process receives the first cache application instruction of the first process, the cache service process may search for and allocate a vacant memory space from the shared memory pool to the first process according to a local-first-then-remote principle.

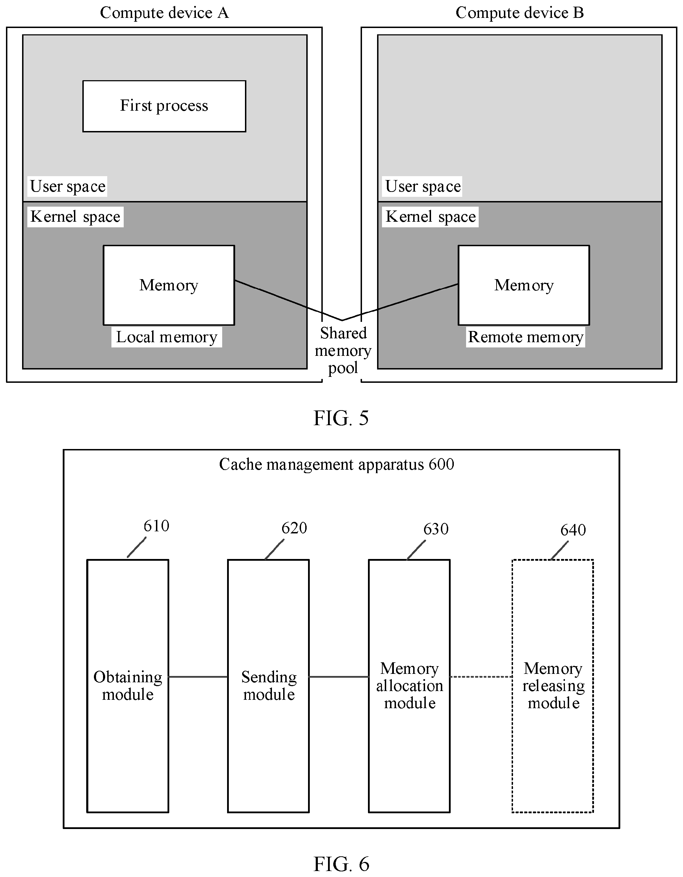

For the local-first-then-remote principle, in an example, as shown in FIG. 5, it is assumed that the first process is performed by a compute device A, the computing cluster further includes a compute device B, and the shared memory pool includes a memory of the compute device A and a memory of the compute device B. In this case, the compute device A is a local device for the first process, and the compute device B is a remote device for the first process. When allocating the first memory space to the first process, a memory service process first determines whether the memory of the compute device A has a vacant memory space that may be allocated. If it is determined that the memory of the compute device A has the vacant memory space that may be allocated, the first memory space is directly allocated from the memory of the compute device A. If it is determined that the memory of the compute device A does not have the vacant memory space that may be allocated, the compute device B is accessed to determine whether the memory of the compute device B has a vacant memory space that may be allocated.

In a possible embodiment, the computing cluster may be a high-performance computing (high-performance computing, HPC) cluster. HPC refers to a system that uses a computing system and environment which utilizes a plurality of processors of a same compute device or a plurality of compute devices in a cluster to perform complex computing processing.

It should be noted that, in the foregoing embodiment, an example in which the process of the first user includes two processes: the first process and the second process is used for description. In a specific implementation, the process of the first user may include more processes. When the process of the first user includes more processes, a manner in which the more processes use the shared memory pool is similar to a manner in which the first process and the second process use the shared memory pool. For brevity of the specification, details are not described herein again.

It may be learned from the foregoing embodiment that, according to the cache management method provided in this application, because the first memory space in the shared memory pool is only shared by the first process of the first user and the second process of the first user, and is not shared by a process of another user, the first process of the first user and the second process of the first user have permission to access data in the first memory space, and the process of the another user does not have permission to access the data in the first memory space, thereby avoiding unauthorized access to the data in the first memory space. Similarly, because the second memory space in the shared memory pool is only shared by the first process of the first user and the second process of the first user, and is not shared by a process of another user, the first process of the first user and the second process of the first user have permission to access data in the second memory space, and the process of the another user does not have permission to access the data in the second memory space, thereby avoiding unauthorized access to the data in the second memory space.

In addition, in the foregoing solution, when the current first memory space of the first process is insufficient to store the data corresponding to the first I/O request, the cache service process allocates the second memory space to the first process according to the first cache application instruction sent by the first process, and when the first memory space corresponding to the second process is insufficient to store the data corresponding to the second I/O request, the cache service process allocates the second memory space to the second process according to the second cache application instruction sent by the second process. Therefore, the shared memory pool is dynamically allocated. It may be understood that, when the shared memory pool can be dynamically allocated, a waste of memory pool resources can be avoided, and the memory pool resources can be efficiently utilized.

It should be understood that, sequence numbers of the steps in embodiments shown in FIG. 2 do not mean execution sequences. The execution sequences of the processes are to be determined based on functions and internal logic of the processes, and should not be construed as any limitation on the implementation processes of embodiments of this application.

The following describes the cache management apparatus provided in this application. It should be understood that, there may be a plurality of types of unit modules in the cache management apparatus. Modules may be software modules, may be hardware modules, or may be a part of software modules and a part of hardware modules. This is not limited in this application. When the cache management apparatus includes a plurality of unit modules, the plurality of unit modules may be deployed on a same compute device (for example, server), or may be deployed on different compute devices. This is not specifically limited in this application.

FIG. 6 is a diagram of a structure of a cache management apparatus 600 according to an embodiment of this application. The apparatus 600 may be used in a computing cluster shown in FIG. 1 that includes at least one compute device. As shown in FIG. 6, the apparatus 600 includes an obtaining module 610, a sending module 620, and a memory allocation module 630.

The following describes functions of modules of the cache management apparatus 600 by using an example. It should be understood that, the functions of the modules described in the following examples are merely functions that the cache management apparatus 600 may have in some embodiments of this application, and the functions of the modules are not limited in this application.

The obtaining module 610 is configured to obtain, through a first process, a first I/O request corresponding to the first process.

The sending module 620 is configured to send, through the first process, a first cache application instruction to a cache service process when a current first memory space of the first process is insufficient to store data corresponding to the first I/O request, where the first memory space is a section of space in a shared memory pool and is shared by the first process and a second process.

The memory allocation module 630 is configured to allocate, through the cache service process, a second memory space in the shared memory pool to the first process according to the first cache application instruction.

The obtaining module 610 is further configured to obtain, through the second process, a second I/O request corresponding to the second process.

The sending module 620 is further configured to send, through the second process, a second cache application instruction to the cache service process when the first memory space corresponding to the second process is insufficient to store data corresponding to the second I/O request.

The memory allocation module 630 is further configured to allocate, through the cache service process, the second memory space to the second process according to the second cache application instruction.

In some possible embodiments, the memory allocation module 630 is specifically configured to:
when the cache service process determines that frequency of a cache application instruction received from processes of the first user is higher than a frequency threshold, allocate, through the cache service process, a plurality of second memory spaces in the shared memory pool to the first process according to the first cache application instruction.

In some possible embodiments, the memory allocation module 630 is specifically configured to:
allocate, through the cache service process, the second memory space in the shared memory pool to the first process based on a first capacity carried in the first cache application instruction, where a capacity of the second memory space is the first capacity.

In some possible embodiments, a capacity of the second memory space is a fixed capacity.

In some possible embodiments, the first memory space is shared by the first process, the second process, and the cache service process.

In some possible embodiments, as shown in FIG. 6, the apparatus 600 further includes a memory releasing module 640.

The memory releasing module 640 is configured to:
after the first memory space is full of data, store, through the cache service process, the data in the first memory space into a disk of the computing cluster; and
release, through the cache service process, the first memory space shared by the first process, the second process, and the cache service process.

In some possible embodiments, the memory releasing module 640 is specifically configured to: when use popularity of a memory space of the cache service process in a namespace of the first user is lower than a popularity threshold, release, through the cache service process, the first memory space shared by the first process, the second process, and the cache service process, where the namespace of the first user includes a memory space that is allocated to the first process and that is in the shared memory pool and a memory space that is allocated to the second process and that is in the shared memory pool.

In some possible embodiments, the memory releasing module 640 is specifically configured to:
generate, through the cache service process, tag information, where the tag information indicates that the first memory space is unavailable;
send, through the cache service process, the tag information to the first process, where the tag information is used by the first process to release the first memory space corresponding to the first process;
send, through the cache service process, the tag information to the second process, where the tag information is used by the second process to release the first memory space corresponding to the second process; and
release, through the cache service process, the first memory space corresponding to the cache service process.

In some possible embodiments, the first process, the second process, and the cache service process are run on a same compute device or different compute devices in the computing cluster.

Specifically, for specific implementations of the operations performed by the cache management apparatus 600, refer to the cache management method provided in this application shown in FIG. 2. For brevity of the specification, details are not described herein again.

In a specific implementation, all of the obtaining module 610, the sending module 620, the memory allocation module 630, and the memory releasing module 640 may be implemented by software, or may be implemented by hardware. For example, the following uses the sending module 620 as an example to describe an implementation of the sending module 620. Similarly, for implementations of the obtaining module 610, the memory allocation module 630, and the memory releasing module 640, refer to the implementation of the sending module 620.

A module is used as an example of a software functional unit, and the sending module 620 may include code run on a computing instance. The computing instance may include at least one of a physical host (compute device), a virtual machine, or a container. Further, there may be one or more computing instances. For example, the sending module 620 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud (virtual private cloud, VPC), or may be distributed on a plurality of VPCs. One VPC is usually disposed in one region. For cross-region communication between two VPCs in a same region and between VPCs in different regions, a communication gateway needs to be disposed in each VPC, and interconnection between the VPCs is implemented through the communication gateway.

The module is used as an example of a hardware functional unit, and the sending module 620 may include at least one compute device, like a server. Alternatively, the sending module 620 may be a device implemented by using an application-specific integrated circuit (application-specific integrated circuit, ASIC), a programmable logic device (programmable logic device, PLD), or the like. The PLD may be implemented by using a complex programmable logical device (complex programmable logical device, CPLD), a field-programmable gate array (field-programmable gate array, FPGA), a generic array logic (generic array logic, GAL), or any combination thereof.

When the sending module 620 includes a plurality of compute devices, the included plurality of compute devices may be distributed in a same region, or may be distributed in different regions. The plurality of compute devices included in the sending module 620 may be distributed in a same AZ, or may be distributed in different AZs. Similarly, the plurality of compute devices included in the sending module 620 may be distributed in a same VPC, or may be distributed in a plurality of VPCs. The plurality of compute devices may be any combination of compute devices such as a server, an ASIC, a PLD, a CPLD, an FPGA, and GAL.

It should be noted that, in another embodiment, the sending module 620 may be configured to perform any step performed by the first process, the second process, and the cache service process in the cache management processing method shown in FIG. 2; the obtaining module 610 may be configured to perform any step performed by the first process, the second process, and the cache service process in the cache management processing method shown in FIG. 2; the memory allocation module 630 may be configured to perform any step performed by the first process, the second process, and the cache service process in the cache management processing method shown in FIG. 2; and the memory releasing module 640 may be configured to perform any step performed by the first process, the second process, and the cache service process in the cache management processing method shown in FIG. 2.

Steps that the obtaining module 610, the sending module 620, the memory allocation module 630, and the memory releasing module 640 are responsible for implementing may be specified as required, and the obtaining module 610, the sending module 620, the memory allocation module 630, and the memory releasing module 640 respectively implement different steps in the cache management processing method shown in FIG. 2 to implement the cache management processing method.

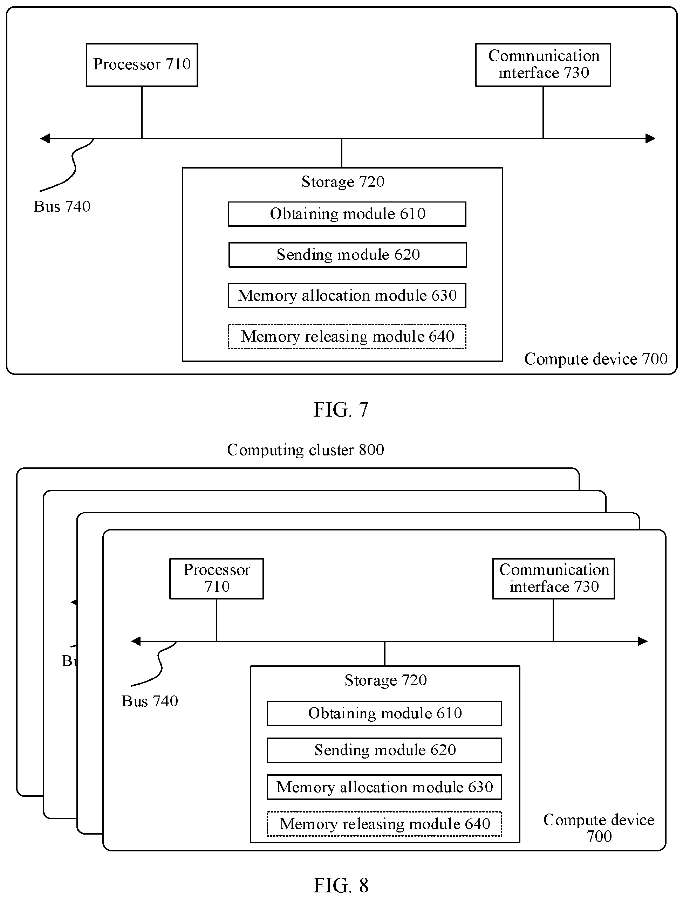

An embodiment of this application further provides a compute device. The compute device may deploy the cache management apparatus 600 shown in FIG. 6. Refer to FIG. 7. As shown in FIG. 7, a compute device 700 includes a processor 710, a storage 720, and a communication interface 730. The processor 710, the storage 720, and the communication interface 730 may be connected to each other by using a bus 740.

The processor 710 may read program code (including instructions) stored in the storage 720, and execute the program code stored in the storage 720, so that the compute device 700 performs the cache management method provided in this application shown in FIG. 2, or the compute device 700 deploys the cache management apparatus 600.

The processor 710 may be implemented in a plurality of specific forms, for example, a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. The processor 710 executes various types of digital storage instructions, for example, software or firmware programs stored in the storage 720, to enable the compute device 700 to provide various services.

The storage 720 is configured to store program code, and the processor 710 controls execution of the program code. The program code may include one or more software modules, and the one or more software modules may be the software modules provided in the embodiment shown in FIG. 6. For example, the program code is code of the obtaining module 610, code of the sending module 620, code of the memory allocation module 630, and code of the memory releasing module 640.

The storage 720 may include a volatile memory (volatile memory), for example, a random access memory (random access memory, RAM). The storage 720 may also include a nonvolatile memory (nonvolatile memory), for example, a read-only memory (read-only memory, ROM), a flash memory (flash memory), a hard disk drive (hard disk drive, HDD), or a solid-state drive (solid-state drive, SSD). The storage 720 may further include a combination of the foregoing types.

The communication interface 730 may be a wired interface (for example, an Ethernet interface, an optical fiber interface, or an interface of another type (for example, an infiniBand interface)) or a wireless interface (for example, a cellular network interface or a wireless local area network interface), and is used to communicate with another compute device or apparatus. The communication interface 730 may use a protocol suite above a transmission control protocol/internet protocol (transmission control protocol/internet protocol, TCP/IP), for example, a remote function call (remote function call, RFC) protocol, a simple object access protocol (simple object access protocol, SOAP), a simple network management protocol (simple network management protocol, SNMP), a common object request broker architecture (common object request broker architecture, CORBA) protocol, and a distributed protocol.

The bus 740 may be a peripheral component interconnect express (peripheral component interconnect express, PCIe) bus, an extended industry standard architecture (extended industry standard architecture, EISA) bus, a unified bus (unified bus, Ubus or UB), a Compute Express Link (compute express link, CXL), a cache coherent interconnect for accelerators (cache coherent interconnect for accelerators, CCIX), or the like. The bus 740 may be classified into an address bus, a data bus, a control bus, and the like. In addition to a data bus, the bus 740 may further include a power bus, a control bus, a status signal bus, and the like. However, for clear description, various types of buses in the figures are marked as the bus 740. For ease of representation, only one bold line is used for representation in FIG. 7, but this does not mean that there is only one bus or only one type of bus.

The compute device 700 may be a server, for example, a central server, an edge server, or a local server in a local data center. In some embodiments, the compute device 700 may alternatively be a terminal device like a desktop computer or a notebook computer.

The compute device 700 is configured to perform the cache management method provided in this application shown in FIG. 2. For a specific implementation process, refer to the foregoing method embodiment. Details are not described herein again.

It should be understood that, the compute device 700 is merely an example provided in embodiments of this application. In addition, the compute device 700 may have more or fewer components than those shown in FIG. 7, may combine two or more components, or may have different component configurations.

An embodiment of this application further provides a computing cluster. The computing cluster may deploy the cache management apparatus 600 shown in FIG. 6. Operations and/or functions of modules in the computing cluster are separately used to implement corresponding steps in the cache management method shown in FIG. 2.

Refer to FIG. 8. As shown in FIG. 8, the computing cluster 800 includes at least one compute device 700. A storage 720 in one or more compute devices 700 in the computing cluster 800 may store the same instructions for performing the cache management method shown in FIG. 2.

In some possible implementations, the storage 720 of the one or more compute devices 700 in the computing cluster 800 may also respectively store a part of instructions for performing the cache management method shown in FIG. 2. In other words, a combination of the one or more compute devices 700 may jointly execute the instructions for performing the cache management method shown in FIG. 2.

It should be noted that the storage 720 in different compute devices 700 in the computing cluster 800 may store different instructions respectively for performing a part of functions of the cache management apparatus 600. In other words, the instructions stored in the storage 720 in different compute devices 700 may implement functions of one or more of the obtaining module 610, the sending module 620, the memory allocation module 630, and the memory releasing module 640.

An embodiment of this application further provides a computer-readable storage medium. The computer-readable storage medium stores instructions. When the instructions are run, some or all of the steps of the cache management method recorded in the foregoing embodiments may be implemented.

An embodiment of this application further provides a computer program product. When the computer program product is read and executed by a computer, some or all of the steps of the cache management method recorded in the foregoing method embodiments are implemented.

In the foregoing embodiments, the description of each embodiment has respective focuses. For a part that is not described in detail in an embodiment, reference may be made to related descriptions in other embodiments.

All or some of the foregoing embodiments may be implemented by using software, hardware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a generalpurpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium, a semiconductor medium, or the like.

The foregoing descriptions are merely specific implementations of this application. Any variation or replacement readily figured out by a person skilled in the art based on the specific implementations provided in this application shall fall within the protection scope of this application.

## Claims

1. A cache management method, applied to a computing cluster comprising at least one compute device, wherein the computing cluster runs a first process and a second process that are of a first user, and a cache service process, the computing cluster comprises a shared memory pool, and the method comprises:
obtaining, by the first process, a first input/output I/O request corresponding to the first process;
sending, by the first process, a first cache application instruction to the cache service process when a current first memory space of the first process is insufficient to store data corresponding to the first I/O request, wherein the first memory space is a section of space in the shared memory pool and is shared by the first process and the second process;
allocating, by the cache service process, a second memory space in the shared memory pool to the first process according to the first cache application instruction;
obtaining, by the second process, a second I/O request corresponding to the second process;
sending, by the second process, a second cache application instruction to the cache service process when the first memory space corresponding to the second process is insufficient to store data corresponding to the second I/O request; and
allocating, by the cache service process, the second memory space to the second process according to the second cache application instruction.

2. The method according to claim 1, wherein the allocating, by the cache service process, the second memory space in the shared memory pool to the first process according to the first cache application instruction comprises:
when the cache service process determines that frequency of a cache application instruction received from processes of the first user is higher than a frequency threshold, allocating, by the cache service process, a plurality of second memory spaces in the shared memory pool to the first process according to the first cache application instruction.

3. The method according to claim 1 or 2, wherein the allocating, by the cache service process, the second memory space in the shared memory pool to the first process according to the first cache application instruction comprises:
allocating, by the cache service process, the second memory space in the shared memory pool to the first process based on a first capacity carried in the first cache application instruction, wherein a capacity of the second memory space is the first capacity.

4. The method according to claim 1 or 2, wherein a capacity of the second memory space is a fixed capacity.

5. The method according to any one of claims 1 to 4, wherein the first memory space is shared by the first process, the second process, and the cache service process.

6. The method according to any one of claims 1 to 5, wherein the method further comprises:
after the first memory space is full of data, storing, by the cache service process, the data in the first memory space into a disk of the computing cluster; and
releasing, by the cache service process, the first memory space shared by the first process, the second process, and the cache service process.

7. The method according to claim 6, wherein the releasing, by the cache service process, the first memory space shared by the first process, the second process, and the cache service process comprises:
when the cache service process determines that use popularity of a memory space in a namespace of the first user is lower than a popularity threshold, releasing, by the cache service process, the first memory space shared by the first process, the second process, and the cache service process, wherein the namespace of the first user comprises a memory space that is allocated to the first process and that is in the shared memory pool and a memory space that is allocated to the second process and that is in the shared memory pool.

8. The method according to claim 6 or 7, wherein the releasing, by the cache service process, the first memory space shared by the first process, the second process, and the cache service process comprises:
generating, by the cache service process, tag information, wherein the tag information indicates that the first memory space is unavailable;
sending, by the cache service process, the tag information to the first process, wherein the tag information is used by the first process to release the first memory space corresponding to the first process;
sending, by the cache service process, the tag information to the second process, wherein the tag information is used by the second process to release the first memory space corresponding to the second process; and
releasing, by the cache service process, the first memory space corresponding to the cache service process.

9. The method according to any one of claims 1 to 8, wherein the first process, the second process, and the cache service process are run on a same compute device or different compute devices in the computing cluster.

10. A cache management apparatus, used in a computing cluster comprising at least one compute device, wherein the computing cluster runs a first process and a second process that are of a first user, and a cache service process, the computing cluster comprises a shared memory pool, and the apparatus comprises:
an obtaining module, configured to obtain, through the first process, a first I/O request corresponding to the first process;
a sending module, configured to send, through the first process, a first cache application instruction to the cache service process when a current first memory space of the first process is insufficient to store data corresponding to the first I/O request, wherein the first memory space is a section of space in the shared memory pool and is shared by the first process and the second process; and
a memory allocation module, configured to allocate, through the cache service process, a second memory space in the shared memory pool to the first process according to the first cache application instruction, wherein
the obtaining module is further configured to obtain, through the second process, a second I/O request corresponding to the second process;
the sending module is further configured to send, through the second process, a second cache application instruction to the cache service process when the first memory space corresponding to the second process is insufficient to store data corresponding to the second I/O request; and
the memory allocation module is further configured to allocate, through the cache service process, the second memory space to the second process according to the second cache application instruction.

11. The apparatus according to claim 10, wherein the memory allocation module is specifically configured to:
when the cache service process determines that frequency of a cache application instruction received from processes of the first user is higher than a frequency threshold, allocate, through the cache service process, a plurality of second memory spaces in the shared memory pool to the first process according to the first cache application instruction.

12. The apparatus according to claim 10 or 11, wherein the memory allocation module is specifically configured to:
allocate, through the cache service process, the second memory space in the shared memory pool to the first process based on a first capacity carried in the first cache application instruction, wherein a capacity of the second memory space is the first capacity.

13. The apparatus according to claim 10 or 11, wherein a capacity of the second memory space is a fixed capacity.

14. The apparatus according to any one of claims 10 to 13, wherein the first memory space is shared by the first process, the second process, and the cache service process.

15. The apparatus according to any one of claims 10 to 14, wherein the apparatus further comprises a memory releasing module, and
the memory releasing module is configured to:
after the first memory space is full of data, store, through the cache service process, the data in the first memory space into a disk of the computing cluster; and
release, through the cache service process, the first memory space shared by the first process, the second process, and the cache service process.

16. The apparatus according to claim 15, wherein the memory releasing module is specifically configured to:
when the cache service process determines that use popularity of a memory space in a namespace of the first user is lower than a popularity threshold, release, through the cache service process, the first memory space shared by the first process, the second process, and the cache service process, wherein the namespace of the first user comprises a memory space that is allocated to the first process and that is in the shared memory pool and a memory space that is allocated to the second process and that is in the shared memory pool.

17. The apparatus according to claim 15 or 16, wherein the memory releasing module is specifically configured to:
generate, through the cache service process, tag information, wherein the tag information indicates that the first memory space is unavailable;
send, through the cache service process, the tag information to the first process, wherein the tag information is used by the first process to release the first memory space corresponding to the first process;
send, through the cache service process, the tag information to the second process, wherein the tag information is used by the second process to release the first memory space corresponding to the second process; and
release, through the cache service process, the first memory space corresponding to the cache service process.

18. The apparatus according to any one of claims 10 to 17, wherein the first process, the second process, and the cache service process are run on a same compute device or different compute devices in the computing cluster.

19. A computing cluster, comprising at least one compute device, wherein each of the at least one compute device comprises a storage and a processor, and a processor of the at least one compute device is configured to execute instructions stored in a storage of the at least one compute device, to cause the computing cluster to perform the method according to any one of claims 1 to 9.

20. A computer storage medium, wherein the computer storage medium stores a computer program for inter-process communication; and when the computer program is executed by a processor, the method according to any one of claims 1 to 9 is implemented.
